# EUROPEAN PATENT APPLICATION

(11) **EP 1 325 983 A1**
(43) Date of publication of application: **09.07.2003**
(21) Application number: 01965699.0
(22) Date of filing: 18.09.2001
(51) Int. Cl.: D21J 3/10

(54) **MULTILAYERED MOLDED CONTAINER**

(30) Priority: 18.09.2000 JP 2000282603
(71) Applicant: Kao Corporation, Tokyo 103-8210 (JP)
(72) Inventor: ISHIKAWA, Masataka, Kao Corporation, Res. Lab., Haga-gun, Tochigi 321-3426 (JP); KUMAMOTO, Yoshiaki, Kao Corp., Res. Lab., Haga-gun, Tochigi 321-3426 (JP)
(74) Representative: Grünecker, Kinkeldey, Stockmair & Schwanhäusser Anwaltssozietät
(86) International application number: JP0108105
(87) International publication number: WO02022954

(57) **Abstract**

A multilayered molded container having at least a moisture-proof layer formed by papermaking which contains a thermoplastic resin having a melting point of 90 to 200°C and a viscosity of 20 to 10000 Pa·s as measured with a capillograph at a shear rate of 100 s⁻¹ and a set temperature of 200°C.

## Description

### Technical Field:

The present invention relates to a multilayered molded container having excellent moisture-proofness.

### Background Art:

Known techniques relating to molded articles obtained from a raw material composition containing paper fiber and a thermoplastic resin include those described in JP-A-44-21592 and JP-A-8-177000. These techniques comprise forming a fiber layer molded article by wet papermaking from a fiber slurry containing thermoplastic resin fiber and softening the thermoplastic resin fiber.

The conventional molded articles, however, are not given due consideration for moisture-proofness, particularly for holding items which change their properties on contact with moisture. Therefore, the molded articles can cause the items held therein to change their properties.

Accordingly, an object of the present invention is to provide a multilayered molded container which is excellent in moisture-proofness and is produced with good moldability.

### Disclosure of the Invention:

The present inventors have found that, where a moisture-proof layer containing a specific thermoplastic resin having a prescribed melting point and a prescribed viscosity measured with a capillograph is used as a layer constituting a multilayered molded container, a desired moisture impermeability is realized, while inhibiting the thermoplastic resin from penetrating into other layers, accelerating penetration of the thermoplastic resin into paper fiber within the moisture-proof layer, and suppressing blistering.

The present invention has been completed based on this finding. The present invention provides a multilayered molded container having at least a moisture-proof layer formed by papermaking which contains a thermoplastic resin having a melting point of 90 to 200°C and a viscosity of 20 to 10000 Pa·s as measured with a capillograph at a shear rate of 100 s⁻¹ and a set temperature of 200°C.

### Brief Description of the Drawings:

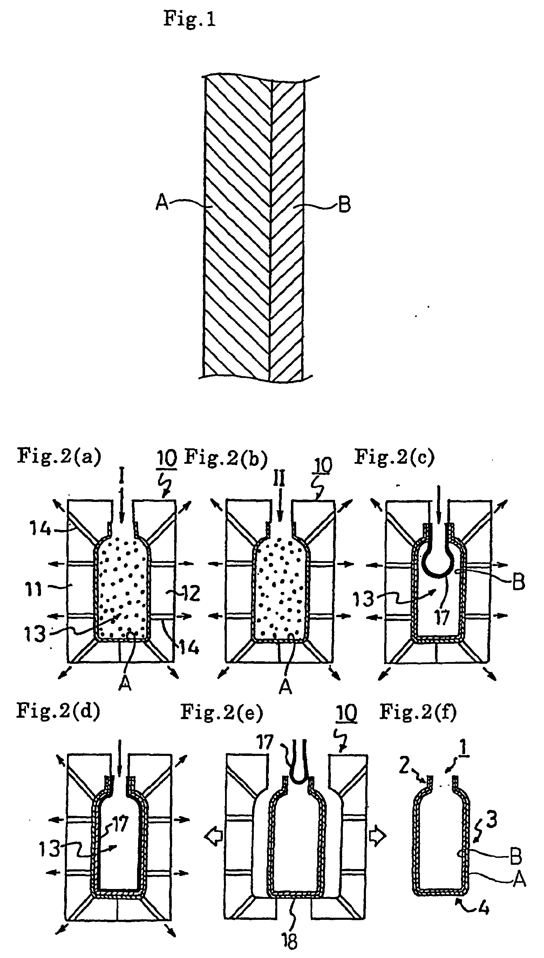

Fig. 1 schematically shows the layer structure of a multilayered molded container according to the present invention.
Fig. 2 schematically illustrates the papermaking/dewatering processing in the production of a multilayered molded container according to the present invention, in which Fig. 2(a) is the step of papermaking for forming a paper fiber layer, Fig. 2(b) is the step of papermaking for forming a moisture-proof layer, Fig. 2(c) is the step of inserting a pressing member, Fig. 2(d) is the step of press dewatering, Fig. 2(e) is the step of removing from a mold, and Fig. 2(f) is a schematic cross-section of the multilayered molded container obtained after papermaking and dewatering.

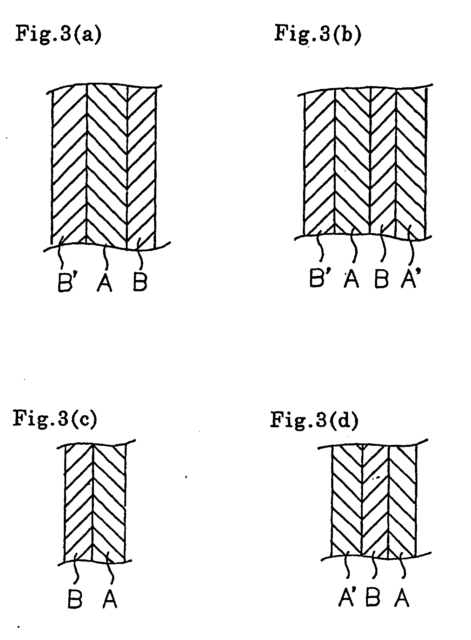

Fig. 3 presents layer structures of other multilayered molded containers according to the present invention, in which Fig. 3(a) shows a structure having a moisture-proof layer on both sides of a paper fiber layer, Fig. 3(b) a structure having a paper fiber layer on the outer side of the structure of Fig. 3(a), Fig. 3(c) a structure having a moisture-proof layer on the outer side of a paper fiber layer, and Fig. 3(d) a structure having a paper fiber layer on the outer side of the structure of Fig. 3(c).

### Best Mode for Carrying out the Invention:

The present invention will be described based on its preferred embodiment. The multilayered molded container of the present invention has at least a moisture-proof layer which is formed by papermaking and contains a thermoplastic resin having a melting point of 90 to 200°C and a viscosity of 20 to 10000 Pa·s as measured with a capillograph at a shear rate of 100 s⁻¹ and a set temperature of 200°C.

The thermoplastic resin contained in the moisture-proof layer has a melting point of 90 to 200°C, preferably 120 to 170°C, so as to form a continuous moisture-proof film without generating pinholes on melting. If the melting point of the thermoplastic resin is lower than 90°C, the resin will melt before water evaporates and penetrate into a layer adjoining the moisture-proof layer. This impairs the appearance and can deteriorate the physical properties. If the melting point of the thermoplastic resin is higher than 200°C, a considerable amount of the thermoplastic resin will remain non-melted, which makes it difficult to form a continuous film, resulting in a failure to obtain desired physical properties.

The thermoplastic resin has a viscosity of 20 to 10000 Pa·s, preferably 1000 to 10000 Pa·s, more preferably 200 to 5000 Pa·s, as measured with a capillograph at a shear rate of 100 s⁻¹ and a set temperature of 200°C.

A thermoplastic resin the viscosity of which is lower than 20 Pa·s would penetrate into a layer adjacent to the moisture-proof layer. It follows that the moisture-proof layer would have a reduced resin density in parts, resulting in a poor appearance and reduced moisture-proofness. Where, in particular, the moisture-proof layer contains paper fiber as described *infra*, such reduction in resin density in parts of the moisture-proof layer leads to a failure to almost completely fill the interstices between paper fibers with the resin component. As a result, the moisture-proof layer has microscopic holes and therefore reduced moisture-proof performance. This appears to be because the thermoplastic resin in a molten state is apt to adhere to the surface of paper fibers due to its surface tension or like actions. An increased amount of the thermoplastic resin will be used in order to compensate for the adhesion to the paper fibers, which is economically disadvantageous.

If the viscosity exceeds 10000 Pa·s, the resin of the moisture-proof layer exhibits insufficient capability of forming a continuous film on melting, resulting in a failure to obtain desired physical properties.

The thermoplastic resin making up the moisture-proof layer includes high-density polyethylene, middle-density polyethylene, low-density polyethylene, polypropylene, polyester, vinylidene chloride, polyvinyl alcohol, and vinyl acetate; and copolymers or modified products of these polymers. Preferred of them are olefinic resins from the standpoint of moisture-proofness improvement. These thermoplastic resins can be used either individually or as a mixture of two or more thereof. The thermoplastic resin content in the moisture-proof layer (as measured on a molded article that has been dried, removed from a drying mold, and allowed to cool to ambient temperature) is preferably 40 to 100% by weight, more preferably 60 to 80% by weight. A thermoplastic resin content less than 40% by weight can result in poor moisture impermeability, failing to obtain desired moisture-proofness.

While the thermoplastic resin can be used in an arbitrary form, a particulate form or a fibrous (linear or multi-branched) form is preferred from the standpoint of dispersibility in the moisture-proof layer while being deposited by papermaking. A particulate one preferably has a particle size of 1.0 mm or smaller, particularly 0.5 mm or smaller. A fibrous one preferably has a diameter of 100 µm or smaller, particularly 50 µm or smaller. The fibrous one preferably has a fiber length of 10.0 mm or shorter, particularly 5.0 mm or shorter. Two or more different forms of the thermoplastic resin(s) can be used in combination.

The thermoplastic resin which can be used to form the moisture-proof layer preferably has an MI of 1 to 50, particularly I to 20. An MI smaller than 1 results in insufficient moldability and insufficient capability of forming a continuous film. A resin having an MI greater than 50 can penetrate into another layer (or bleed on the surface of the moisture-proof layer provided as an outer layer), resulting in a poor appearance and a reduced moisture impermeability.

The moisture-proof layer of the multilayered molded container according to the invention may further comprise paper fiber. Combined use of paper fiber prevents separation of the thermoplastic resin from a dispersing medium in a slurry during formation of the moisture-proof layer. Further, freeness can be controlled by using pulp beaten to a low degree, etc. to improve moldability and to make the thickness of the molded article uniform. Usable paper fibers include wood pulp including virgin pulp and recycled pulp, and nonwood pulp, such as cotton pulp, linter pulp, bamboo, and straw. Preferred of them are virgin pulp and recycled pulp in view of availability, stable supply, and production cost. A preferred paper fiber content in the moisture-proof layer (as measured on a molded article that has been dried, removed from a drying mold, and allowed to cool to ambient temperature) is 0 to 60% by weight, particularly 10 to 30% by weight. A paper fiber content exceeding 60% by weight results in a failure to obtain desired moisture-proofness.

The moisture-proof layer of the multilayered molded container according to the present invention may further comprise a hydrophobic material in addition to, or in place of, the paper fiber. Incorporation of a hydrophobic material into the moisture-proof layer not only increases drying efficiency of the thermoplastic resin in the moisture-proof layer but also provides a denser moisture-proof layer. Further, moisture-proofness is manifested with a reduced content of the thermoplastic resin in the moisture-proof layer. Furthermore, when a molded layer is dried while being pressed by a pressing member as hereinafter described, the molten thermoplastic resin is prevented from adhering to the pressing member.

The hydrophobic material includes inorganic fillers, inorganic fibers, and thermosetting resins. A preferred content of the hydrophobic material in the moisture-proof layer (as measured on a molded article that has been dried, removed from a drying mold, and allowed to cool to ambient temperature) is 0 to 50% by weight, particularly 10 to 40% by weight.

The inorganic fillers as a hydrophobic material include silicates, such as aluminosilicates and talc, carbonates, such as calcium carbonate, mica, kaolin clay, aluminum hydroxide, zinc oxide, fired clay, and silica. An appropriate inorganic filler is chosen in relation to a colorant used. Calcium carbonate or an aluminosilicate, which are inorganic fillers having anionic surface charges, are preferred. Calcium carbonate is more preferred from the viewpoint of dispersibility in a papermaking slurry, yield, and the like. In particular, a prescribed inorganic filler used as a hydrophobic material in combination with the paper fiber also functions as an agent suppressive on nonuniform coloring as hereinafter described.

The inorganic fibers as a hydrophobic material include glass fiber and carbon fiber.

The thermosetting resins as a hydrophobic material include phenol resins, epoxy resins, urea resins, furan resins, polyurethane resins, amino resins such as melamine resins, unsaturated polyester resins, and diallyl phthalate resins.

These hydrophilic materials can be used either individually or as a mixture of two or more thereof.

The moisture-proof layer can further comprise an adequate amount of a resin to improve melt flowability of the thermoplastic resin and thereby allowing the thermoplastic resin to form a uniform continuous resin film.

The moisture-proof layer which is made solely of the thermoplastic resin and the hydrophobic material, such as the inorganic filler, exhibits no liquid absorbing properties. The multilayered molded container with such a moisture-proof layer is specially suited for holding liquid or gel.

A colorant may be incorporated into the moisture-proof layer. Any kind of colorants that is capable of imparting some color to the moisture-proof layer can be used with no particular restriction. Usable colorants include organic pigments, inorganic pigments, metallic pigments, and dyes. The organic pigments include phthalocyanine pigments, azo pigments, and condensed polycyclic pigments. The inorganic pigments include titanium dioxide, iron oxide, pearl mica, barium sulfate, and titanium black. The metallic pigments include tabular iron oxide, graphite, and aluminum powder. The dyes include various kinds, such as acid dyes, basic dyes, and oil colors. Preferred examples are Levacell Yellow R (yellow dye), Levacell Scarlet 4BS (red dye), Levacell Black G (black dye), and Kayafect Orange G (reddish yellow dye). The above-recited pigments are preferred among these colorants in view of high yield in coloring paper fiber incorporated into the moisture-proof layer, ease in waste water disposal, color developability of the moisture-proof layer, and fastness to heat and weather. Where the moisture-proof layer contains the paper fiber, anionic pigments are particularly preferred for good fixing to the paper fiber.

It is preferred for the colorant to be incorporated into the moisture-proof layer to have an average particle size of 0.001 to 1 µm, particularly 0.01 to 0.7 µm, for exhibiting excellent coloring power and hiding powder to provide a molded article with a good appearance. The average particle size is measured by microscopic observation or sedimentation analysis. The term "average particle size" as used hereinafter means a value measured by theses methods. Colorant particles can have various shapes, including spheres, plates, and rods. The maximum length of the particles is taken as the particle size, and the average of the maximum lengths is taken as an average particle size (hereinafter the same).

The amount of the colorant to be added to the moisture-proof layer varies depending on the kind of the colorant, a desired degree of coloring the moisture-proof layer, and the like. Where the moisture-proof layer contains the paper fiber, the amount preferably ranges 0.01 to 5 parts by weight, particularly 0.05 to 2.5 parts by weight, per 100 parts by weight of the paper fiber, for improving the appearance of the moisture-proof layer and for curbing outflow of the colorant into white water.

It is preferred to incorporate an inorganic filler into the moisture-proof layer as an agent for suppressing nonuniform coloring with the colorant (hereinafter referred to as a nonuniform coloring suppressor). Where the moisture-proof layer contains paper fiber, the inorganic filler improves fixing of the colorant to the paper fiber, prevents uneven coloring, and allows the colorant to color the paper fiber layer uniformly during formation of the moisture-proof.

The inorganic filler as a nonuniform coloring suppressor includes those recited above as a hydrophobic material. Calcium carbonate or an aluminosilicate, which are inorganic fillers having anionic surface charges, are particularly preferred.

The inorganic filler as a nonuniform coloring suppressor preferably has an average particle size of 0.1 to 30 µm, particularly 0.5 to 10 µm, for prevention of nonuniform coloring and for maintenance of mechanical strength of the moisture-proof layer, especially impact strength. It is preferred that the inorganic filler have a greater average particle size than the colorant so as to effectively allow the colorant to be fixed thereon thereby preventing nonuniform coloring. For ensuring the suppressor effect on nonuniform coloring, the average particle size of the inorganic filler is preferably 5 to 300 times, more preferably 10 to 100 times, that of the colorant.

For prevention of nonuniform coloring, ease of toning, maintenance of the mechanical strength of the moisture-proof layer, and suppressing hydrophilic properties of the moisture-proof layer, a preferred amount of the inorganic filler to be used as a nonuniform coloring suppressor in the moisture-proof layer is 5 to 30 parts by weight, particularly 7 to 25 parts by weight, especially 10 to 20 parts by weight, per 100 parts by weight of the paper fiber of the moisture-proof layer.

It is preferred for the moisture-proof layer to further contain a fixing agent as a nonuniform coloring suppressor in addition to the inorganic filler serving as a nonuniform coloring suppressor. The fixing agent includes aluminum sulfate, polyaluminum chloride, starch, polyacrylamide, polyamine-polyamide-epichlorohydrin resins, and melamine formaldehyde resins, from which a proper agent is selected in relation to the colorant used. It is particularly preferred to use ammonium sulfate or polyaluminum chloride as a fixing agent.

The combined use of the fixing agent and the inorganic filler as nonuniform coloring suppressors is more effective in improving fixing of the colorant onto paper fiber while preventing coloring unevenness during formation of the moisture-proof layer and achieving more uniform coloring of the moisture-proof layer with the colorant.

For improving the fixing of the colorant to paper fiber and preventing nonuniform coloring, a preferred amount of the fixing agent to be used as a nonuniform coloring suppressor in the moisture-proof layer is 0.2 to 3 parts by weight, particularly 0.25 to 1.5 parts by weight, especially 0.3 to 1 part by weight, per 100 parts by weight of the paper fiber of the moisture-proof layer.

If necessary, the moisture-proof layer can further comprise other additives, such as sizes, water repellants, paper strength agents, pitch control agents, foam inhibitors, fixing assistants, molding assistants, surface active agents, antifungal agents, antistatic agents, and so forth in addition to the paper fiber, the hydrophobic material, the colorant, and the fixing agent and the inorganic filler as nonuniform coloring suppressors. These components may be incorporated into the moisture-proof layer either internally in the step of forming the moisture-proof layer by addition to the stock of the moisture-proof layer or externally during or after the production of the multilayered molded container.

The multilayered molded container of the present invention has a paper fiber layer formed in contact with the inner or outer side of the moisture-proof layer. The paper fiber layer adjoining the inner or outer side of the moisture-proof layer provides a molded container with higher moisture-proofness and better appearance.

The paper fiber layer may consists solely of paper fiber or comprise paper fiber as a main component and other components, such as a colorant, a fixing agent, a nonuniform coloring suppressor, a waterproofing agent, a water-soluble resin, a water repellant, an antifungal agent, an antistatic agent, a molding assistant, and the like. The amount of the other components in the paper fiber layer (as measured on a molded article that has been dried, removed from a drying mold, and allowed to cool to ambient temperature) is preferably 0.01 to 20% by weight, more preferably 0.1 to 10% by weight.

The paper fibers which can be used to make the paper fiber layer include those recited above for the moisture-proof layer formation. Where the paper fiber layer is formed on the outer side of the moisture-proof layer, bleached recycled paper is preferably used from the standpoint of appearance, ease of coloring, etc. Where the paper fiber layer is formed on the inside, nonbleached recycled paper is preferably used from the standpoint of cost.

The paper fiber layer can further comprise other fibrous components in addition to the paper fiber, such as inorganic substances, e.g., talc and kaolinite, inorganic fibers, e.g., glass fiber and carbon fiber, nonwood or plant fibers, and polysaccharides. A preferred content of the other fibrous components in the paper fiber layer is 1 to 70% by weight, particularly 5 to 50% by weight.

The colorant which can be incorporated into the paper fiber layer is not particularly limited in kind as long as it is capable of adding some color to the paper fiber layer. The same colorants as employable in the moisture-proof layer can be used. Similarly to the moisture-proof layer, the pigments described *supra* are preferred in view of high yield in coloring paper fiber layer, ease in waste water disposal, color developability of the paper fiber layer, and fastness to heat and weather. Anionic pigments are more preferred for good fixing to the paper fiber.

A preferred average particle size of the colorant to be incorporated into the paper fiber layer is the same as that of the colorant in the moisture-proof layer.

The amount of the colorant to be added to the paper fiber layer, while depending on the kind of the colorant, a desired degree of coloring the paper fiber layer, and the like, preferably ranges 0.01 to 5 parts by weight, particularly 0.05 to 2.5 parts by weight, per 100 parts by weight of the paper fiber, for improving the appearance of the paper fiber layer and for curbing outflow of the colorant into white water.

Similarly to the moisture-proof layer, the paper fiber layer preferably contains the above-described inorganic filler as an agent for suppressing nonuniform coloring with the colorant (nonuniform coloring suppressor). The inorganic filler improves fixing of the colorant to the paper fiber, prevents nonuniform coloring, and allows the colorant to color the paper fiber layer uniformly during formation of the paper fiber layer.

The inorganic filler as a nonuniform coloring suppressor is chosen appropriately in relation to the colorant used in the paper fiber layer. Calcium carbonate or an aluminosilicate, which are inorganic fillers having anionic surface charges, are particularly preferred.

Similarly to the inorganic filler used in the moisture-proof layer, the inorganic filler used in the paper fiber layer as a nonuniform coloring suppressor preferably has an average particle size of 0.1 to 30 µm, particularly 0.5 to 10 µm, for prevention of coloring unevenness and maintenance of mechanical strength of the paper fiber layer, especially impact strength. Similarly to the inorganic filler in the moisture-proof layer, the inorganic filler used in the paper fiber layer as a nonuniform coloring suppressor preferably has a greater average particle size than the colorant used in the paper fiber layer so as to effectively allow the colorant to be fixed thereon thereby preventing coloring unevenness. For ensuring the suppressor effect on nonuniform coloring, the average particle size of the inorganic filler used in the paper fiber layer is preferably 5 to 300 times, more preferably 10 to 100 times, that of the colorant used in the paper fiber layer.

For prevention of nonuniform coloring, ease of toning, maintenance of the mechanical strength of the paper fiber layer, and suppressing hydrophilic properties of the paper fiber layer, a preferred amount of the inorganic filler to be used as a nonuniform coloring suppressor in the paper fiber layer is 5 to 30 parts by weight, particularly 7 to 25 parts by weight, especially 10 to 20 parts by weight, per 100 parts by weight of the paper fiber of the paper fiber layer.

It is preferred for the paper fiber layer to contain a fixing agent as a nonuniform coloring suppressor in addition to the inorganic filler as a nonuniform coloring suppressor similarly to the moisture-proof layer. A proper fixing agent is selected from those usable in the moisture-proof layer in relation to the colorant used. It is particularly preferred to use aluminum sulfate or polyaluminum chloride as a fixing agent as described *infra*.

A combined use of the fixing agent and the inorganic filler as nonuniform coloring suppressors is more effective in improving fixing of the colorant onto paper fiber while preventing nonuniform coloring during formation of the paper fiber layer and achieving more uniform coloring of the paper fiber layer with the colorant.

For improving the fixing of the colorant to paper fiber and preventing nonuniform coloring, a preferred amount of the fixing agent to be used as a nonuniform coloring suppressor in the paper fiber layer is 0.2 to 3 parts by weight, particularly 0.25 to 1.5 parts by weight, especially 0.3 to 1 part by weight, per 100 parts by weight of the paper fiber.

The paper fiber layer can further comprise various additives commonly used in this type of a paper fiber layer in addition to the paper fiber, the colorant, and the fixing agent and the inorganic filler as nonuniform coloring suppressors thereby to impart desired functions. Such additives include sizes, water repellants, paper strength agents, pitch control agents, foam inhibitors, fixing assistants, waterproofing agents, fixing agents, antifungal agents, antistatic agents, and so forth. These additives may be incorporated into the paper fiber layer either internally in the step of forming the paper fiber layer by addition to the paper fiber layer-forming slurry or externally during or after the production of the multilayered molded container.

The paper fiber layer comprising these additives preferably has a surface tension of 10 dyn/cm or less and a water repellency of R10 (JIS P8137).

Another paper fiber layer or a coating layer containing additives, such as a waterproofing agent, water repellant, a fixing agent, an antifungal agent, and an antistatic agent, may be provided on the outer side of the paper fiber layer which is on the outer side of the moisture-proof layer thereby to improve the appearance, surface strength, water resistance, and the like.

The multilayered molded container of the present invention having the above-mentioned structure preferably has a moisture permeability of not more than 500 g/m²·24 hr, particularly not more than 100 g/m²·24 hr, especially not more than 50 g/m²·24 hr, for preventing the contents which are hygroscopic from changing their properties or for preventing water from penetrating in a short time. Where the container is intended to hold liquid, the moisture permeability is preferably not more than 20 g/m²·24 hr.

An example of the multilayer structure of the multilayered molded container of the present invention is shown in Fig. 1, in which a moisture-proof layer B is formed as an inner layer on the inner side of a paper fiber layer A as an outer layer.

The thickness of the paper fiber layer A is selected appropriately according to the use of the multilayered molded container of the invention. The thickness of the moisture-proof layer is also selected appropriately according to the use of the multilayered molded container of the invention. Where the multilayered molded container of the present invention is used to hold hygroscopic powder, such as powder detergent, the total wall thickness (as measured on a molded article that has been dried, removed from a drying mold, and allowed to cool to ambient temperature) is preferably 0.01 to 1.0 mm, more preferably 0.05 to 0.75 mm, for assuring moisture-proofness and appearance of the container. The moisture-proof layer which is thinner than 0.01 mm fails to secure satisfactory moisture-proofness and stable physical properties. If the thickness of the moisture-proof layer exceeds 1.0 mm, blisters occur easily to deteriorate the appearance, and the continuous film formed from a molten resin can break, resulting in reduction of physical properties. The thickness of each layer is decided by the concentrations and pours of the paper fiber layer-forming slurry and the moisture-proof layer-forming slurry used to produce the container.

The multilayered molded container of the present invention has wide applications. It is applicable to the same fields in which ordinary plastic moldings are used. For example, the multilayered molded container of the present invention can be used as a bottle, a carton, a tray, etc. Having excellent moisture-proofness, the multilayered molded container of the invention is suited to hold hygroscopic items, such as powder detergent.

A process for producing an embodiment of the multilayered molded container according to the present invention will be described by referring to the accompanying drawing. Figs. 2(a) through (e) schematically illustrate the papermaking/dewatering processing in the production of a multilayered molded container according to the present invention, in which (a) is the step of papermaking for forming a paper fiber layer, (b) is the step of papermaking for forming a moisture-proof layer, (c) is the step of inserting a pressing member, (d) is the step of press dewatering, and (e) is the step of removing from a mold.

A slurry I for a paper fiber layer and a slurry II for a moisture-proof layer are prepared.

The paper fiber layer-forming slurry I is preferably a water slurry containing 0.1 to 4% by weight, particularly 0.3 to 2% by weight, of paper fiber for allowing paper fiber to be deposited to a uniform thickness and be colored uniformly. The paper fiber of the paper fiber layer-forming slurry I is chosen from those usable to make the paper fiber layer.

The paper fiber layer-forming slurry may contain the aforementioned colorant, fixing agent, and nonuniform coloring suppressor.

In preparing a paper fiber layer-forming slurry containing the colorant, the fixing agent, and the inorganic filler as a nonuniform coloring suppressor, it is preferred for preventing nonuniform coloring that the colorant be the first to be added and mixed into a slurry containing the paper fiber and that the inorganic filler be the second. It is particularly preferred for preventing nonuniform coloring more effectively that the fixing agent be added in any stage before addition of the inorganic filler and that the zeta potential of the paper fiber in the finally obtained fiber layer-forming slurry be 0 to -15 mV, particularly -3 to -10 mV. The fixing agent can be added, for example, according to the following order of addition (a), (b) or (c).
(a) (1) colorant → (2) fixing agent → (3) inorganic filler
(b) (1) fixing agent → (2) colorant → (3) inorganic filler
(c) (1) fixing agent → (2) colorant → (3) inorganic filler → (4) fixing agent

Of the orders (a) to (c), the order (a) or (b) is preferred for increasing the coloring power and making smaller flocks of the paper fiber thereby improving the color definition or color developability of the colorant. If necessary, additives, such as a size, a water repellant, a paper strength agent, a pitch control agent, a foam inhibitor, a fixing assistant, a waterproofing agent, a molding assistant, an antifungal agent, and an antistatic agent, can be added before or after the addition of the fixing agent.

The zeta potential of the paper fiber is measured by a streaming potential method capable of measurement in a slurried state. In the present invention, a papermaking system zeta potential meter SZP 04 (trade name, supplied by Nihon Rufuto Co., Ltd.) was used.

It is particularly preferred to use ammonium sulfate or polyaluminum chloride, which are acidic fixing agents, and an alkaline carbonate as an inorganic filler to adjust the pH of the pulp slurry to a neutral region, e.g., 6.0 to 8.5 (25°C). In this case, the resulting molded article is less susceptible to deterioration with time, and the white water is easier to treat. It is especially preferred to use aluminum sulfate or polyaluminum chloride, which are cationic polyvalent metal salts.

The moisture-proof layer-forming slurry II is a water slurry of the above-described thermoplastic resin. The concentration of the thermoplastic resin in the moisture-proof layer-forming slurry II is preferably 0.1 to 4% by weight, more preferably 0.5 to 2% by weight.

The moisture-proof layer-forming slurry II can contain the above-described hydrophobic material. In order to secure desired moisture-proofness even with a reduced amount the moisture-proofing thermoplastic resin, the amount of the hydrophobic material (solid content) in the moisture-proof layer-forming slurry is preferably 0 to 50% by weight, more preferably 10 to 40% by weight.

The moisture-proof layer-forming slurry II can contain the aforementioned paper fiber used to form the moisture-proof layer. The paper fiber concentration (solid content) in the moisture-proof layer-forming slurry II is preferably 0 to 60% by weight, more preferably 10 to 30% by weight.

The moisture-proof layer-forming slurry can also contain the above-described colorant, fixing agent, and nonuniform coloring suppressor. In adding the colorant, fixing agent, and nonuniform coloring suppressor to the paper fiber-containing slurry for moisture-proof layer, they are preferably added in the same order as described with reference to the paper fiber layer.

The moisture-proof layer-forming slurry II can further contain other additives, such as a dispersant, a waterproofing agent, a surface active agent, a water repellent, an antifungal agent, and an antistatic agent, in addition to the aforementioned components. The amount of these other components in the moisture-proof layer-forming slurry II is preferably 0.01 to 20% by weight, more preferably 0.1 to 10% by weight.

As shown in Fig. 2(a), a predetermined amount of the paper fiber layer-forming slurry I is poured under pressure into a mold 10 from the upper opening of the mold. The mold 10 is composed of a pair of splits 11 and 12 which are joined to form a cavity 13 of a shape corresponding to the contour of a multilayered molded container to be molded. The cavity 13 is thus pressurized. The splits 11 and 12 each have a plurality of interconnecting holes 14 connecting the cavity 13 to the outside and have the inner side thereof covered with a screen (not shown) with a prescribed mesh size. Pouring the paper fiber layer-forming slurry I under pressure (i.e., injection) is conducted by means of, for example, a pressure pump. The injection pressure of the paper fiber layer-forming slurry I is preferably 0.01 to 5 MPa, more preferably 0.01 to 3 MPa.

Since the inner pressure of the cavity 13 is increased to a prescribed pressure as stated, the water content of the paper fiber layer-forming slurry I is sucked through the interconnecting holes 14 and drained out from the mold 10. Meanwhile the paper fiber is accumulated on the screen covering the cavity 13 to uniformly form a paper fiber layer A as an outermost layer as shown in Fig. 2(b). Further, even in molding a three-dimensional multilayered bottle container, the prescribed inner pressure of the cavity 13 generates convection of the slurry in the cavity 13 thereby to agitate the slurry. As a result, the slurry concentration is equalized in the vertical direction in the cavity 13 to allow the paper fiber to be accumulated uniformly on the screen.

After completion of the injection of the paper fiber layer-forming slurry into the cavity 13, the moisture-proof layer-forming slurry II is injected into the cavity 13 from the upper opening of the mold 10. The pressure of injecting the moisture-proof layer-forming slurry II can be approximately the same as the injection pressure of the paper fiber layer-forming slurry I. By injecting the moisture-proof layer-forming slurry II, the pressurized state in the cavity 13 is maintained.

While the moisture-proof layer-forming slurry II is injected, dewatering from the cavity 13 is continued, whereupon a moisture-proof layer B made of the solid components of the moisture-proof layer-forming slurry II is formed on the paper fiber layer A. Since the cavity 13 is in a pressurized state, the moisture-proof layer B is formed with a uniform thickness. In detail, even in molding a three-dimensional multilayered bottle container as in the present invention, each slurry, being poured into the cavity 13 under pressure, is convected in the cavity 13 and therefore agitated. As a result, the slurry concentration is equalized in the vertical direction of the cavity 13 to level the thickness of each of the paper fiber layer A and the moisture-proof layer B.

After the moisture-proof layer B is formed to a prescribed thickness, injection of the moisture-proof layer-forming slurry is stopped, and air is introduced under pressure into the cavity 13 to conduct press dewatering. Then, air introduction is stopped, and a hollow, elastic and expandable pressing member 17 is inserted into the cavity 13 while evacuating the cavity 13 by suction as shown in Fig. 2(c). The pressing member 17 is adapted to be inflated like a balloon in the cavity 13 to press the accumulated structure composed of the paper fiber layer A and the moisture-proof layer B (hereinafter referred to as a multilayer fiber preform) onto the inner wall of the cavity 13 thereby to transfer the inner configuration of the cavity 13 to the preform. Therefore, the pressing member 17 is made from urethane, fluororubber, silicone rubber, an elastomer, etc. which are excellent in tensile strength, impact resilience, and expandability.

A pressurizing fluid is fed into the pressing member 17 to inflate the pressing member 17 thereby pressing the multilayer fiber preform to the inner wall of the cavity 13 as illustrated in Fig. 2(d). The multilayer fiber preform is pressed toward the inner wall of the cavity 13 by the inflated pressing member 17. The inner configuration of the cavity 13 is thus transferred to the multilayer fiber preform, and dewatering further proceeds.

Since the multilayer fiber preform is pressed from the inside to the inner wall of the cavity 13, the shape of the cavity 13, however complicated it may be, is transferred to the multilayer fiber preform with good precision. Moreover, because a step of joining parts as involved in conventional methods of producing pulp moldings is unnecessary, the resulting molded article has neither joint seams nor thick-walled parts. Therefore, the resulting molded article exhibits enhanced strength and a satisfactory appearance. The pressurizing fluid used to inflate the pressing member 17 includes compressed air (heated air), oil (heated oil) and other liquids. The pressure for feeding the pressurizing fluid is preferably 0.01 to 5 MPa, particularly 0.1 to 3 MPa.

After the inner shape of the cavity 13 is sufficiently transferred to the multilayer fiber preform, and the multilayer fiber preform is dewatered to a prescribed water content, the pressurizing fluid is withdrawn from the pressing member 17 as shown in Fig. 2(e). Then the pressing member 17 automatically shrinks to its original size. The shrunken pressing member 17 is taken out of the cavity 13. The mold 10 is opened to remove the wet multilayer fiber preform having a prescribed water content.

If desired, the press dewatering step using the pressing member 17 (Figs. 2(c) to 2(e)) may be omitted. In this case dewatering and molding can be carried out by introducing air under pressure into the cavity 13 to press and dewater.

The multilayer fiber preform 18 thus taken out is then subjected to the step of heat drying. The heat drying step is carried out in the same manner as in the papermaking step shown in Fig. 2 except that papermaking and dewatering are not conducted. A mold composed of a set of splits, which are joined together to form a cavity of a shape corresponding to the contour of a molded article to be formed, is heated to a prescribed temperature, and the wet multilayer fiber preform is fitted into the mold.

A pressing member similar to the pressing member 17 used in the papermaking step is inserted into the multilayer fiber preform. A pressurizing fluid is fed into the pressing member to inflate the pressing member, whereby the multilayer fiber preform is pressed toward the inner wall of the cavity. The pressing member can be of the same material as used in the papermaking/dewatering step. It is preferred to use a pressing member having its surface modified with a fluororesin or a silicone resin so as to prevent the thermoplastic resin contained in the moisture-proof layer from sticking thereto on melting. The pressure of feeding the pressurizing fluid can be the same as in the papermaking step. In this condition, the multilayer fiber preform is dried by heating.

According as the multilayer fiber preform is heat dried in a pressed state, the distance between the thermoplastic resin and the paper fiber if present in the moisture-proof layer is shortened, and the thermoplastic resin is then melted to exhibit the above-recited viscosity characteristics. Therefore, the thermoplastic resin is confined within the moisture-proof layer, being prevented from penetrating into the adjacent layer. As a result, the thermoplastic resin of the moisture-proof layer is formed into a continuous film to develop effective moisture-proof characteristics.

In order to melt the thermoplastic resin in the moisture-proof layer, the set heating temperature of the mold is preferably 120 to 300°C, more preferably 150 to 250°C.

On drying the multilayer fiber preform sufficiently, the pressurizing fluid is withdrawn from the pressing member, and the thus shrunken pressing member is taken out. The mold is opened, and the multilayered molded container is removed. The temperature of removal from the mold is preferably higher than the melting point of the thermoplastic resin contained in the moisture-proof layer so that the thermoplastic resin may be melted to form a continuous film.

The multilayered molded container 1 thus obtained is a bottle container having a cylindrical shape with a smaller diameter at the opening 2 than the diameter at the body 3. Having the moisture-proof layer B inside the paper fiber layer A, the container I exhibits high moisture-proofness and is specially suited to keep hygroscopic materials, such as powders and granules. Free from blisters, the molded container 1 has an excellent appearance. It has no joint seams in any of the opening portion 2, the body 3, and the bottom 4, which are integrally molded. Therefore, the molded container 1 has enhanced strength and gives good outer impression.

The present invention is not limited to the aforementioned embodiment, and various changes and modifications can be made therein without departing from the spirit and scope thereof.

While the multilayered molded container of the present invention preferably has a double layer structure consisting of the paper fiber layer A as an outer layer and the moisture-proof layer B as an inner layer as in the embodiment shown in Fig. 1, it may be three-layered, having, for example, the layer structure of Fig. 1 plus another moisture-proof layer B' on the outer side of the paper fiber layer A as shown in Fig. 3(a).

It may be a multilayered molded container of four-layered structure having, for example, the three-layered structure of Fig. 3(a) and another paper fiber layer A' on the inside as shown in Fig. 3(b). A multilayered molded container having such a layer structure with the moisture-proof layer as an innermost layer is suitable for keeping liquids, gels, and water-containing materials as well as hygroscopic items.

The multilayered molded container of the present invention can have such a double layer structure with the moisture-proof layer B on the outer side of the paper fiber layer A as shown in Fig. 3(c). The multilayered container having such a double layer structure and the one having a three layer structure with the moisture-proof layer on both sides of the paper fiber layer are suitable as a container requiring water repellency on its outer surface.

The container of the present invention can have a three layer structure consisting of the layer structure shown in Fig. 3(c) and another paper fiber layer A' on the outer side of the moisture-proof layer B as shown in Fig. 3(d). Having the paper fiber layer on both the side brought into contact with the drying mold and the side brought into contact with the pressing member, this three layer structure prevents the thermoplastic resin contained in the moisture-proof layer from sticking to the inner wall of the drying mold or the pressing member. In addition, this structure is more suited to transfer a complicated shape than the structure of Fig. 3(a).

In the above-described structures, the fiber layer A and the fiber layer A' may be the same or different in constitution. Likewise, the moisture-proof layer B and the moisture-proof layer B' may be the same or different in constitution. It is possible to provide, between the paper fiber layer A (or A') and the moisture-proof layer B (or B'), a mixed layer in which the composition continuously changes from that of the paper fiber layer to that of the moisture-proof layer.

For realizing simplification of the drying step in the production of the multilayered molded container of the present invention, it is preferred that the multilayer fiber preform be dried through a single drying operation. It is possible, however, to dry the preform by a multi-stage drying step including a first drying stage which aims to remove the water content from the preform and a second drying stage which aims to melt the thermoplastic resin in the moisture-proof layer to form a continuous film of the resin. When the multi-stage drying step is followed, because melting of the thermoplastic resin is preceded by sufficient removal of the water content, the resulting resin film will have a dense structure free from marks caused by escape of steam.

Where a multilayered molded container is produced by the multi-stage drying step, drying in the first drying stage is preferably performed at a drying temperature of 100 to (Tm-20)°C, where Tm is the melting point of the thermoplastic resin used in the moisture-proof layer. The water content of the preform after the first drying stage is preferably 30% or less. The drying temperature in the second drying stage is properly set according to the thermoplastic resin used in the moisture-proof layer.

Drying in the first drying stage can be carried out by, for example, passing the preform removed from the papermaking mold through a tunnel drier as well as by the above-described method comprising pressing in the drying mold. Drying in the second drying stage can be carried out by ejecting hot air or steam as well as by the methods adaptable in the first drying stage.

The portion of the molded article on which load is imposed, such as the opening portion or the bottom, may be provided with a reinforcing member made of plastics, etc. to have improved durability. Otherwise part of such a portion may be formed of plastics, etc.

The multilayered molded container according to the present invention can be a carton having a substantially rectangular parallelepipedal shape with its opening portion and body having almost the same cross-sectional shape. The multilayered molded container of the present invention is useful as not only a hollow container for keeping the contents but an ornament and the like.

The multilayered molded container of the present invention can be produced by not only the above-described papermaking method comprising feeding a slurry into a cavity but also other methods applicable to make this type of multilayered molded containers.

The present invention will now be illustrated in greater detail with reference to Examples.

In Examples 1 to 11 and Comparative Examples 1 to 3, multilayered molded bottle containers each weighing about 45 g, measuring 750 ml in capacity, and having a paper fiber layer (layer A) as an outer layer and a moisture-proof layer (layer B) as an inner layer were produced by using the respective raw material compositions shown below under the molding conditions shown below. The resulting multilayered molded bottle containers were measured for thickness of each layer and for moisture permeability by the methods described below. The results obtained are shown in Table 1.

### Molding conditions:

1) Papermaking and dewatering
   Paper fiber layer (layer A)-forming slurry injection pressure: 0.05 MPa
   Moisture-proof layer (layer B)-forming slurry injection pressure: 0.05 MPa
   Pressing with pressing member: 1 MPa x 7 seconds
2) Drying
   Mold temperature: 220°C
   Pressing with pressing member: 1.0 MPa x 60 seconds
   Temperature of removal from mold: 150°C

### EXAMPLE 1

### Composition of paper fiber layer (layer A)-forming slurry:

Slurry concentration: 1.0 wt%
Solid component in slurry: paper fiber (recycled pulp) 100%

### Composition of moisture-proof layer-forming slurry:

Slurry concentration: 1.0 wt%
Solid component in slurry:
   Paper fiber: recycled pulp 30 wt%
   High density polyethylene (HDPE) (melting point: 135°C;
      fiber length: 0.9 mm;
      fiber diameter: 30 µm or
      smaller) 70 wt%

### EXAMPLE 2

A multilayered molded container was produced in the same manner as in Example 1, except for using HDPE having a viscosity of 1600 Pa·s in the moisture-proof layer.

### EXAMPLE 3

A multilayered molded container was produced in the same manner as in Example 1, except for using HDPE having a viscosity of 445 Pa·s in the moisture-proof layer.

### EXAMPLE 4

A multilayered molded container was produced in the same manner as in Example 1, except that the HDPE to be used in the moisture-proof layer was mixed with low-density polyethylene (LDPE) to adjust the melting point and the viscosity to 125°C and 760 Pa·s, respectively.

### EXAMPLE 5

A multilayered molded container was produced in the same manner as in Example 1, except for changing the HDPE content in the moisture-proof layer to 100% by weight.

### EXAMPLE 6

A multilayered molded container was produced in the same manner as in Example 1, except for changing the HDPE content in the moisture-proof layer to 70% by weight.

### EXAMPLE 7

A multilayered molded container was produced in the same manner as in Example 1, except for replacing the thermoplastic resin in the moisture-proof layer with the following formulation.

### Thermoplastic resin formulation:

HDPE (melting point: 135°C; viscosity: 360 Pa·s; fiber length: 0.9 mm;
   fiber diameter: 30 µm or smaller): 70 wt%
Polypropylene (melting point: 165°C; fiber length: 1.0 mm;
   fiber diameter: 70 to 80 µm): 30 wt%

### EXAMPLE 8

A multilayered molded container was produced in the same manner as in Example 1, except for using the following formulations as the paper fiber layer-forming slurry and the moisture-proof layer-forming slurry and using calcium carbonate of rod form (0.2 µm (diameter) x 1.5 µm (length; according to the catalogue) as an inorganic filler.

### Paper fiber layer-forming slurry:

Slurry concentration: 1.0 wt%
Solid component in the slurry: paper fiber 100 wt%

### Moisture-proof layer-forming slurry:

Slurry concentration: 1.0 wt%
Solid component in the slurry:
   Paper fiber 30 wt%
   Thermoplastic resin 50 wt%
   Inorganic filler 20 wt%

### EXAMPLE 9

A multilayered molded container was produced in the same manner as in Example 1, except for using the thermoplastic resin for the moisture-proof layer in a particulate form (particle size: 0.2 mm) and changing the thickness of the moisture-proof layer to 0.1 mm.

### EXAMPLE 10

A multilayered molded container was produced in the same manner as in Example 1, except for using the thermoplastic resin for the moisture-proof layer in a particulate form (particle size: 0.2 mm) and changing the thermoplastic resin content in the moisture-proof layer to 100 wt%.

### EXAMPLE 11

A multilayered molded container was produced in the same manner as in Example 1, except for changing the thermoplastic resin content in the moisture-proof layer to 30 wt%.

### EXAMPLE 12

A multilayered molded container was produced in the same manner as in Example 1, except for using a hydroxybutyric acid-hydroxyvaleric acid copolymer (melting point: 140°C; viscosity: 26 Pa·s; fibrous) in the moisture-proof layer.

### EXAMPLE 13

A multilayered molded container was produced in the same manner as in Example 1, except for using polylactic acid (melting point: 130°C; viscosity: 26 Pa·s; fibrous) in the moisture-proof layer.

### EXAMPLE 14

A multilayered molded container was produced in the same manner as in Example 1, except for using HDPE (melting point: 95°C; viscosity: 33.2 Pa·s; fiber length: 0.9 mm; fiber diameter: 30 µm or smaller) in the moisture-proof layer.

### EXAMPLE 15

A multilayered molded container was produced in the same manner as in Example 1, except for using HDPE (viscosity: 35.2 Pa·s; fiber length: 0.9 mm; fiber diameter: 30 µm or smaller) in the moisture-proof layer.

### COMPARATIVE EXAMPLE 1

A multilayered molded container was produced in the same manner as in Example 1, except for using polyester (melting point: 255°C; fiber length: 5 mm; fiber diameter: 50 µm) in the moisture-proof layer.

### COMPARATIVE EXAMPLE 2

A multilayered molded container was produced in the same manner as in Example 1, except for using a synthetic wax (melting point: 98°C; viscosity: 10 Pa·s; powder) in the moisture-proof layer.

### Measurement of viscosity:

Measurement was made with a capillograph (manufactured by Toyo Seiki Kogyo Co., Ltd.) using a capillary of 5.0 mm in length and 0.5 mm in inner diameter at a set temperature of 200°C.

### Measurement of layer thickness:

The total wall thickness of the resulting molded article was measured with Magna-Mike 8000 (supplied by Panametrics). The average thickness of each layer was calculated from the weights of the solids used in the layers of the molded article.

### Measurement of moisture permeability:

The body of the multilayered molded bottle container was measured for the rate of water vapor transmission from the moisture-proof layer to the paper fiber layer by the dish method (JIS Z0208).

### Evaluation of continuous film:

Formation of a continuous film was evaluated by dropping isopropyl alcohol (IPA) on the surface of the moisture-proof layer. The part of the moisture-proof layer which changed its color immediately on contact with IPA or the part of the moisture-proof layer through which IPA penetrates into the other layer was regarded as a defective part. The area ratio of the defective part to the total area of the moisture-proof layer was used as a measure for evaluation, which was rated according to the following criteria.
AA ... Less than 5%
A ... 5% or more and less than 10%
B ... 10% or more and less than 30%
C ... 30% or more

### Evaluation of appearance:

The appearance of the resulting multilayered molded container was observed with the naked eye and rated on an A-to-C scale in terms of the degree of oozing of the resin from the moisture-proof layer onto the surface of the outer layer (layer A).
A ... Resin's oozing on the layer A surface is not observed with the naked eye.
B ... Resin's oozing on the layer A surface is observed with the naked eye, while the oozing area is less than 30% of the entire area.
C ... Resin's oozing is observed with the naked eye over a 30% or wider area of the layer A surface.

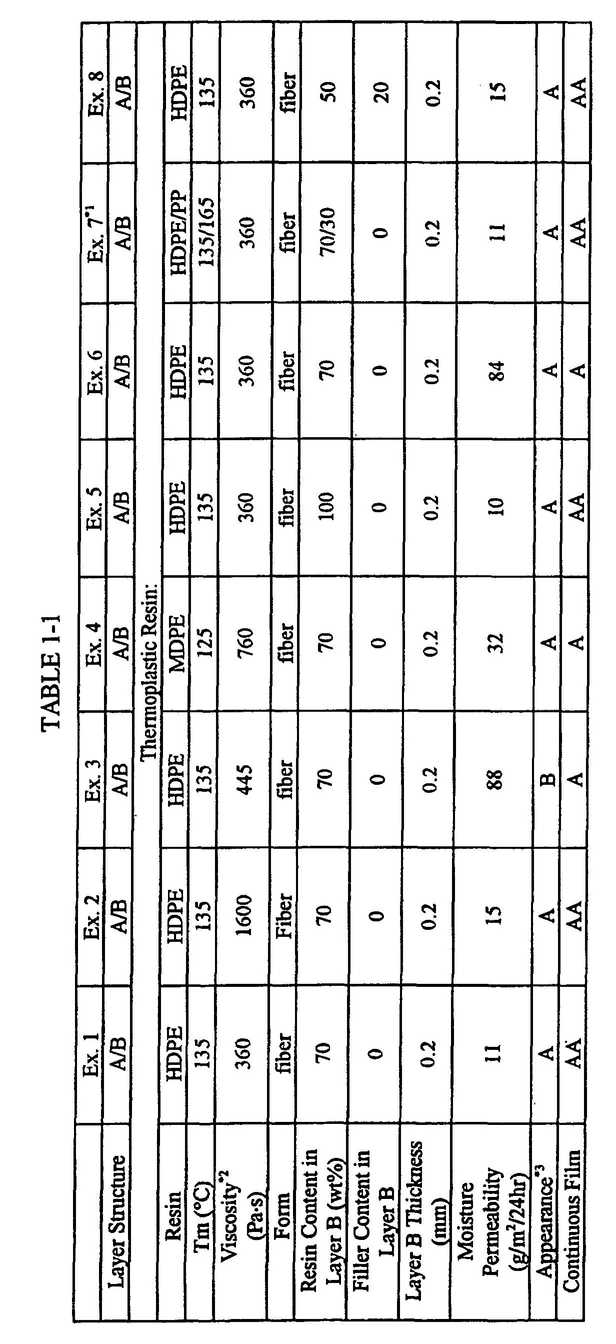

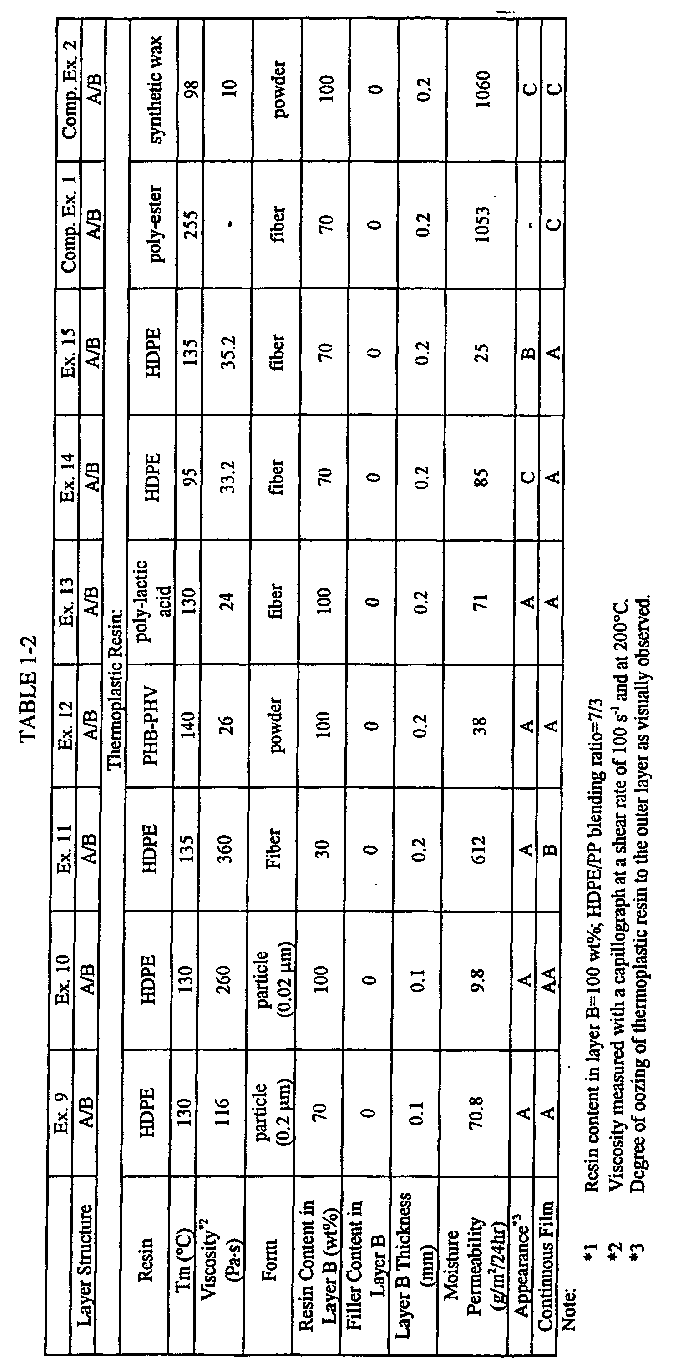

As is apparent from the results in Table 1, it was confirmed that the multilayered molded bottle containers of Examples (the articles of the present invention) have low moisture permeability and a good appearance, while those of Comparative Examples are defective in at least one of moisture impermeability and appearance. Of the containers of Examples, in particular, those having a moisture permeability of not more than 20 g/m²·24 hr sufficiently stands use for holding liquid.

### Industrial Applicability:

The present invention provides a multilayered molded container having excellent moisture-proofness.

## Claims

1. A multilayered molded container having at least a moisture-proof layer formed by papermaking which contains a thermoplastic resin having a melting point of 90 to 200°C and a viscosity of 20 to 10000 Pa·s as measured with a capillograph at a shear rate of 100 s⁻¹ and a set temperature of 200°C.

2. The multilayered molded container according to claim 1, wherein the content of said thermoplastic resin in said moisture-proof layer is 40 to 100% by weight.

3. The multilayered molded container according to claim 1, wherein said moisture-proof layer contains an inorganic filler.

4. The multilayered molded container according to claim 1, wherein said moisture-proof layer contains paper fiber.

5. The multilayered molded container according to claim 1, which has a moisture permeability of 500 g/m²·24 hr or less.
